(19) Europäisches Patentamt
European Patent Office
Office européen des brevets

(11) **EP 3 861 043 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19774122.6**

(22) Anmeldetag: **01.10.2019**

(51) Internationale Patentklassifikation (IPC):
*C08G 18/72* (2006.01)   *C08J 9/00* (2006.01)
*C08G 18/32* (2006.01)

(52) Gemeinsame Patentklassifikation (CPC):
**C08G 18/724; C08G 18/3206; C08J 9/0061;**
C08G 2101/00; C08G 2110/0025; C08J 2375/04

(86) Internationale Anmeldenummer:
**PCT/EP2019/076617**

(87) Internationale Veröffentlichungsnummer:
**WO 2020/070140 (09.04.2020 Gazette 2020/15)**

(54) **TRANSLUZENTE POLYURETHAN- ODER POLYISOCYANURATSCHAUMSTOFFE**

TRANSLUCENT POLYURETHANE OR POLYISOCYANURATE FOAMS

MOUSSES POLYURÉTHANES OU POLYISOCYANURATES TRANSLUCIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2018 EP 18198126**

(43) Veröffentlichungstag der Anmeldung:
**11.08.2021 Patentblatt 2021/32**

(73) Patentinhaber: **Covestro Intellectual Property GmbH & Co. KG**
**51373 Leverkusen (DE)**

(72) Erfinder:
• **BÖHNKE, Lutz**
**51491 Overath (DE)**
• **ACHTEN, Dirk**
**51375 Leverkusen (DE)**
• **LAAS, Hans-Josef**
**51519 Odenthal (DE)**
• **BIJLARD, Ann-Christin**
**51465 Bergisch Gladbach (DE)**

(56) Entgegenhaltungen:
DE-A1-102005 042 235

**Beschreibung**

Die vorliegende Erfindung betrifft transluzente, bevorzugt überwiegend geschlossenzellige und lichtechte, Polyurethan- oder Polyisocyanuratschaumstoffe, die eine hohe Lichttransmission besitzen und daher z.B. für die Herstellung von transluzenten Bauelementen geeignet sind.

Stand der Technik

Polyisocyanat-basierte Hartschaumstoffe als Zwischenschicht für Sandwichstrukturen (geformte Sandwichplatten) sowie deren Verwendung zur Herstellung von Bauelementen sind an sich bekannt. Auch transluzente Schaumstoffplatten als Wand- und Deckenplatten wurden schon beschrieben, z.B. DE 10 2005 042 235 A1. Allerdings wurde die Transluzenz nicht dadurch erreicht, dass die Schaumstoffe selbst transluzent sind, sondern dadurch, dass Lichtleitfasern eingearbeitet wurden. Die aus dem Stand der Technik bekannten Polyurethan- und Polyisocyanuratschaumstoffe sind jedoch an sich nicht transluzent.

Polyurethan- und Polyisocyanuratschaumstoffe werden üblicherweise zur Wärmedämmung eingesetzt. Transluzente Schäume mit guter Lichtdurchlässigkeit und gutem thermischen Isolationsverhalten sind als Materialien sowohl für die Bauindustrie als auch im Bereich Innenraum und Wohndesign interessant. Raumtrennende Elemente mit transluzenten aber nicht transparenten Eigenschaften, bei gleichzeitiger Dämpfung von Geräusch und Wärme, sind auf Basis von organischen witterungsstabilen und hochvernetzten Kunststoffen noch nicht beschrieben, würden aber in einer neuen Kombination verschiedene Bedürfnisse befriedigen wie Witterungsstabilität, Dämmung, Lichtdurchlässigkeit, Sichtschutz, und Farbstabilität.

Thermoplastische Multistegplatten auf Basis von Polymethylmethacrylat und Polycarbonat, die auch transparent gestaltet sein können, werden zu diesem Zweck manchmal eingesetzt. Der Prozess der Herstellung von Multistegplatten erlaubt allerdings nicht die direkte Herstellung geschlossener zellulärer Strukturen, weshalb Vergilbung, Veralgung und andere durch Feuchtigkeitsmigration verursachte Effekte nie ganz ausgeschlossen werden können. Außerdem sind hochwertige Dämmung und Sichtschutz nur bedingt vorhanden und sehr aufwendig, und zum Beispiel durch Füllen der Multistegplatten mit Silica basierten Aerogelen möglich. Auch hier ist die Wasseraufnahme und Volumenstabilität der gefüllten Komponente kritisch. Transluzente Bauelemente auf Basis von Silica-Aerogelen sind zudem in ihre Herstellung aufwändig und teuer.

Die Aufgabe der vorliegenden Erfindung bestand somit darin einen Polyurethan- und Polyisocyanuratschaumstoff mit hoher Transluzenz zur Verfügung zu stellen. Vorzugsweise sollen diese Schäume weitestgehend farblos, somit bei Bedarf einfärbbar und zudem temperaturstabil sein. Eine weitere Aufgabe der vorliegenden Erfindung bestand darin, ein effizientes Verfahren zur Herstellung von transluzenten, dämmenden Baustoffen, die die oben genannte Bedürfnisse befriedigen und oben genannte Nachteile überkommen, zur Verfügung zu stellen.

Die Aufgaben wurde gelöst durch ein Verfahren zur Herstellung von transluzenten Polyurethan- und Polyisocyanuratschaumstoffen durch Umsetzung einer Komponente A umfassend oder bestehend aus,

A1    mindestens ein, mit der Komponente B reaktives, Polyol;

A2    gegebenenfalls mindestens ein Amin;

A3    Wasser und gegebenenfalls Ameisensäure oder mindestens ein physikalisches Treibmittel oder Mischungen davon;

A4    mindestens einen Schaumstabilisator

A5    gegebenenfalls Hilfs- und/oder Zusatzstoffe;

A6    gegebenenfalls mindestens ein Flammschutzmittel;

A7    mindestens einen Katalysator;

und eine Komponente B, deren Gehalt an aromatischen Polyisocyanaten wenigstens 5 Gew.-% und höchstens 70 Gew.-% beträgt, umfassend,

B1    mindestens eine aliphatische oder cycloaliphatische Polyisocyanatkomponente oder eine Kombination davon;

B2    gegebenenfalls mindestens ein hydrophiliertes Isocyanat; und

B3    größer oder gleich 10 Gew.-Teile und bis zu 70 Gew.-Teile bevorzugt bis zu 50 Gew.-Teile und ganz besonders bevorzugt bis zu 40 Gew.-Teile und insbesondere bevorzugt bis zu 30 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden, dadurch gekennzeichnet, dass

die Umsetzung der Komponente A mit der Komponente B bei einer Isocyanat-Kennzahl von wenigstens 200 bevorzugt von wenigstens 250 und besonders bevorzugt von wenigstens 300 durchgeführt wird,

wobei im Wesentlichen keine gasförmigen Nukleierungsmittel, eingetragen durch den Mischprozess, bei der Reaktion anwesend sind, und

wobei die erhaltenen transluzenten Polyurethan- und Polyisocyanuratschaumstoffe eine Lichttransmission nach EN ISO 13468-2:2006 von mindestens 10% und einen Haze von mindestens 70%, bestimmt nach ASTM D1003-13, jeweils gemessen bei einer Schichtdicke von 20 mm, aufweisen.

Überraschenderweise wurde nun gefunden, dass die erfindungsgemäßen Schäume auf Basis von Polyurethan- und Polyisocyanuratschäumen, hergestellt aus der spezifischen Zusammensetzung der vorliegenden Erfindung, eine höhere Lichttransmission besitzen, insbesondere wenn die einzelnen Komponenten bevorzugt möglichst blasenfrei vermischt werden und mit einem chemischen Treibmittel geschäumt werden. Hierbei ist bevorzugt die Inkorporation von Gasen, insbesondere von Luft zu vermeiden. Die Lichttransmission der erfindungsgemäßen Formulierungen ist tendenziell höher, wenn die Reaktionsmischung vor dem Einsatz der Treibreaktion bevorzugt eine möglichst geringe Trübung nach DIN EN ISO 7027 aufweist. Da die Trübung maßgeblich durch Streuung des Lichtes an Mikrobläschen verursacht wird, kann diese als Maß für die durch eingemischte Luft / Gas gebildeten Mikrobläschen herangezogen werden.

Werden in einer bevorzugten Ausführungsform die Komponenten auf diese Art vermischt, dann haben die erfindungsgemäßen Schäume auf Basis von Polyurethan- und Polyisocyanuratschäumen eine besonders hohe Lichttransmission von mindestens 10% bei 20 mm Dicke gemessen kombiniert mit guten Dämmeigenschaften, nämlich einer Wärmeleitfähigkeit, bevorzugt von kleiner als 100 mW/(m*K). Neben der guten Transluzenz und guten Dämmeigenschaften zeigen die erfindungsgemäßen Schäume überdies eine sehr gute thermische Beständigkeit bzw. eine gute Flammwidrigkeit, welche für den Einsatz beispielsweise im Baubereich vorteilhaft ist.

Unter einem transluzenten Schaumstoff wird ein solcher verstanden, der im Bereich von 400 nm bis 800 nm eine Lichttransmission von mindestens 10%, bestimmt nach EN ISO 13468-2:2006 bei einer Dicke von 20 mm, bevorzugt wenigstens 20%, aufweist. Der erhaltene Schaumstoff weist zudem einen Haze (= 100*Transmission diffus / Transmission gesamt) von mindestens 70%, bestimmt nach ASTM D1003-13 bei einer Schichtdicke von 20 mm, vorzugsweise von mindestens 90%, stärker bevorzugt von mindestens 95%, am stärksten bevorzugt von mindestens 99% auf.

Unter einem Polyurethan- bzw. Polyisocyanuratschaumstoff wird ein Schaumstoff verstanden, bei dem die Aushärtung der flüssigen Ausgangsformulierung, enthaltend Isocyanate und Polyole mit einer Kennzahl ≥150, bevorzugt ≥200, besonders bevorzugt ≥300 zu einem vernetzten Polymer in Schaumform führt. Die Reaktion verläuft bevorzugt zu einem großen Teil über eine Trimerisierungsreaktion der Isocyanatfunktion, wobei überwiegend Polyisocyanurate entstehen.

Die Kennzahl gibt NCO-reaktiven Äquivalente im Verhältnis zu den aktiven H-Funktionen, meist OH- oder NH-Äquivalente an (Kunststoffhandbuch 7, Polyurethane, 1983, S. 12)

Die Berechnung der Kennzahl, in nachstehender Gleichung Index genannt, erfolgt nach folgender Gleichung:

$$\text{Index} = \frac{100 \cdot \text{NCO\_Äquivalente}}{\text{OH\_Äquivalente}}$$

In der vorliegenden Erfindung sind die Begriffe "im Wesentlichen keine" und "im Wesentlichen frei von" so zu verstehen, dass das jeweilige Merkmal, in Bezug auf das jeweilige System, Gemisch oder die jeweilige Komponente in weniger als 2%, bevorzugt in weniger als 1%, stärker bevorzugt in weniger als 0,5%, am stärksten bevorzugt in weniger als 0,1% vorliegt oder nicht vorhanden ist.

Handelsübliche Polyurethan- und Polyisocyanuratschäume haben typischerweise eine Transluzenz von kleiner 10 % gemessen bei einer Schaumstoffdicke von 20 mm. Ohne an eine Theorie gebunden zu sein wird davon ausgegangen, dass aufgrund der, im Verhältnis zu den transluzenten Schäumen, kleinen Zellgrößen und aufgrund der vielen Zellstege Licht stark gestreut wird, wodurch die Lichttransmission aufgrund von starker Reflektion des einfallenden Lichtes an der Oberfläche stark abnimmt. Die Zellstegdicken von im Stand der Technik bekannten Schäumen betragen üblicherweise dabei 0,01 bis 0,04 mm. Weiter zeigen herkömmliche Polyurethan- und Polyisocyanuratschäume auf Basis von aromatischen Di- und Polyisocyanaten eine hohe Tendenz zur witterungsbedingten Vergilbung, die wiederum die Transluzenz über die Zeit verringert und die Optik der Schäume negativ (Vergilbung) beeinflusst.

Polyolkomponente A1

Die erfindungsgemäße Zusammensetzung enthält mindestens ein, mit der Komponente B reaktives, Polyol A1 und optional mindestens ein Amin A2. Als Polyole werden bevorzugt Diole und Triole verwendet. Geeignete Polyole haben bevorzugt einen Siedepunkt bei 1bar von größer als 150°C.

Beispiele für bevorzugte Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Besonders bevorzugt sind Glycerin, Ethylenglykol, Diethylenglykol, Propylenglykol, Butandiole, Neopentylglycol, Pentanole und Trimethylolpropan. Am stärksten bevorzugt sind Diethylenglykol, Trimethylolpropan und Glycerin.

Neben den reinen Polyolen bzw. Di- und Triolen können in geringem Umfang auch Carbonatdiole, Polyesterpolyole und Polyetherpolyole eingesetzt werden. Letztere haben aber eine geringere Licht- und UV-Beständigkeit und sind deshalb weniger gut geeignet, insbesondere, wenn der erhaltene transluzente Schaum nicht durch UV-Licht absorbierenden transparenten Materialien geschützt ist. Außerdem bedingt die schlechtere Wasserlöslichkeit solcher Polyole eine verstärkte Blasenbildung welche in erfindungsgemäßen Verfahren zu tendenziell feinzelligeren Schäumen führt.

Komponente A2

In der Komponente A können gegebenenfalls Amine enthalten sein, bevorzugt sekundäre und / oder tertiäre Amine wie Dieethanolamin und / oder Triethanolamin und / oder Amin gestartete Polyether. Geeignete Amine haben bevorzugt einen Siedepunkt bei 1bar von größer als 200°C.

Komponente A3

Chemische Treibmittel sind dem Fachmann auf dem Gebiet der Schaumstoffe bekannt.

Die Menge des eingesetzten chemischen Treibmittels A3 hängt von der gewünschten Dichte des Schaums ab. Die Komponente A3 enthält Wasser und in einer bevorzugten Ausführungsform zusätzlich Ameisensäure.

Zusätzlich zu Wasser können in bevorzugten Ausführungsformen auch physikalische Treibmittel verwendet werden. Als physikalische Treibmittel eignen sich beispielsweise halogenierte Kohlenwasserstoffe (insbesondere schwer entflammbare oder nicht brennbare niedermolekulare Fluorkohlenwasserstoffe wie HFC-254fa (1,1,1,3,3-Pentafluorpropan), HFC-365mfc (1,1,1,3,3-Pentafluorbutan), Ester (insbesondere Methylformiat, Ethylformiat, Methylacetat und Ethylacetat oder Gemische davon), Gase wie Kohlenstoff, Stickstoff, sowie Kohlenwasserstoffe (insbesondere c-Pentan, n-Pentan, i-Pentan, alle Isomere von Hexan).

In einer weiteren bevorzugten Ausführungsform enthält die Komponente A3 Wasser und mindestens ein physikalisches Treibmittel, bevorzugt mindestens einen Kohlenwasserstoff, insbesondere c-Pentan.

Komponente A4

Mindestens eine Komponente ausgewählt aus oberflächenaktiven Zusatzstoffen, insbesondere Silikontensiden und stärker bevorzugt Siloxan-Polyoxyalkylen-Copolymeren und Polydimethylsiloxan-Polyoxyalkylen-Copolymeren,

Komponente A5

Hilfs- und/oder Zusatzstoffe für Polyurethan- und Polyisocyanuratschaumstoffe sind dem Fachmann auf dem Gebiet bekannt und können optional enthalten sein. In bevorzugten Ausführungsformen können zum Schutz der Schäume Antioxidantien und Hitzestabilisatoren eingesetzt werden. Antioxidantien sind chemische Verbindungen, die einen Radikalabbau und -zerfall verhindern oder verzögern. Dies sind zum einen Radikalfänger, die reaktive H-Atome besitzen, wie sterisch gehinderte Phenole (z.B. kommerziell erhältlich als Irganox 1135) oder sie zersetzen Hydroperoxide (thermo-oxidativer Abbau), wie z.B. Thioester (kommerziell erhältlich als PS800). Ferner können in bevorzugten Ausführungsformen Lichtschutzmittel enthalten sein. Diese sind beispielsweise Verbindungen aus der Gruppe der Benzotriazole (z.B. kommerziell erhältlich unter den Handelsnamen Tinuvin 213, Tinuvin 326) und die sogenannten HALS (hindered amine light stabilizers, beispielsweise kommerziell erhältlich unter dem Handelsnamen Tinuvin 765). Ferner können auch kommerziell erhältliche synergistische Mischungen wie beispielsweise Tinuvin B75, bestehend aus 20% Irganox 1135, 40% Tinuvin 571 und 40% Tinuvin 765 enthalten sein. Bevorzugt enthält A5 mindestens eine Komponente ausgewählt aus Initiatoren, Additiven, Pigmenten, Füllstoffen und oder eine Kombination davon.

Komponente A6

In der Komponente A kann gegebenenfalls eine Komponente A6, nämlich mindestens ein Flammschutzmittel, enthalten sein. Die Menge von A6 hängt von den gewünschten Brandeigenschaften des Schaums ab und ist dem Fachmann bekannt. Als bevorzugte Flammschutzmittel werden farblose und nicht färbende Flammschutzmittel eingesetzt, stärker bevorzugt Phosphorhaltige Verbindungen, stärker bevorzugt Phosphate, besonders bevorzugt Triethylphosphat.

Katalysatoren A7

Bei der Bildung von Schaumstoffen aus Polyol/Wasser-Gemischen, Polyol/Wasser/Ameisensäure-Gemischen und Isocyanat bzw. Polyisocyanat ist der Einsatz geeigneter Katalysatoren erforderlich. Diese sind dem Fachmann bekannt.

Geeignete Katalysatoren sind z.B. Ammoniumformiat, Ammoniumacetat, Ammoniumoktanoat, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Natriumacetat, Natriumoctoat, Natriumethylhexoat, Kaliumformiat, Kaliumacetat, Kaliumethylhexanoat, Kaliumoctanoat sowie Mischungen davon. Um die Treibreaktion (Reaktion zwischen Wasser und gegebenenfalls Ameisensäure und Isocyanat) zu beschleunigen, können auch zusätzlich aminische Katalysatoren zum Einsatz kommen, wie beispielsweise 1,8-Diazabicyclo[5.4.0]undec-7-en (DBU) etc. In EP 0629607 A2 wird zum Beispiel die Herstellung von tertiären Aminogruppen aufweisende Verbindung und deren Verwendung als Katalysator beschrieben. Bevorzugt werden Katalysatoren auf Basis von Kalium Salzen von organischen Säuren eingesetzt. Besonders bevorzugt sind Kaliumacetat, Kaliumethylhexanoat. Bevorzugt wird die Treibreaktion durch synergistische Aminkatalysatoren wie zum Beispiel DBU beschleunigt.

Polyisocyanatkomponente B (auch bezeichnet als Komponente B)

Ausgangsverbindungen für die Polyisocyanatkomponente B für das erfindungsgemäße Verfahren sind B1 mindestens eine aliphatische oder cycloaliphatische Polyisocyanatkomponente oder eine Kombination davon, gegebenenfalls B2 mindestens ein hydrophiliertes Isocyanat und B3 mindestens einer aromatischen Polyisocyanatkomponente mit größer oder gleich 10 Gew.-Teile und bis zu 70 Gew.-Teile bevorzugt bis zu 50 Gew.-Teile und ganz besonders bevorzugt bis zu 40 Gew.-Teile, wobei die Gewichtsteile von B3 bezogen sind auf die Summe der Gewichtsteile von B1 bis B3, welche auf 100 Gew.-Teile normiert werden.

Die aromatische Polyisocyanatkomponente B3 ist die Gesamtheit aller Polyisocyanate, die aromatische Polyisocyanate enthalten oder daraus bestehen. Dies können monomere aromatische Di- und Triisocyanate sein. Es kann sich aber auch um oligomere Polyisocyanate handeln, die durch Oligomerisierung von monomeren Isocyanaten nach den bekannten Verfahren erhalten werden. Als Edukte für derartige Oligomerisierungen kommen Zusammensetzungen in Frage, die ausschließlich aus aromatischen Di- und ggf. Triisocyanaten bestehen. Es können aber auch Beimengungen von aliphatischen und / oder cycloaliphatischen Di- oder Triisocyanaten enthalten sein. Solche Beimengungen sind insbesondere bevorzugt, um den weiter unten in dieser Anmeldung als bevorzugt gekennzeichneten Isocyanatgehalt von höchstens 25 Gew.-% zu erreichen.

Der Einsatz der oben beschriebenen Polyisocyanatkomponenten B3 führt zu Polyisocyanatkomponenten B mit einem Gesamtgehalt an aromatischen Polyisocyanaten von wenigstens 5 Gew.-% und höchstens 70 Gew.-%, bevorzugt wenigstens 10 Gew.-% und höchstens 70 Gew.-%, stärker bevorzugt wenigstens 20 Gew.-% und höchstens 70 Gew.-%, noch stärker bevorzugt wenigstens 20 Gew.-% und höchstens 55 Gew.-% und am stärksten bevorzugt wenigstens 20 Gew.-% und höchstens 40 Gew.-% bezogen auf das Gesamtgewicht der Polyisocyanatkomponente B. Wird eine oligomere Polyisocyanatkomponente B3 eingesetzt, kann der Gesamtgehalt an aromatischen Isocyanaten vom Mengenanteil der Polyisocyanatkomponente B3 abweichen. Dies ist dann der Fall, wenn oligomere Polyisocyanatkomponenten B3 verwendet werden, die neben aromatischen Diisocyanaten auch aliphatische oder cycloaliphatische Diisocyanate als Aufbaukomponenten enthalten.

Solche Isocyanate werden typischerweise durch Phosgenierung hergestellt, können aber auch auf phosgenfreiem Weg, beispielsweise durch Urethanspaltung, hergestellt werden. In einem bevorzugten Fall werden die Produkte einer gezielten Trimerisierung von Diisocyanaten, als bei Raumtemperatur (23°C) flüssige Ausgangsverbindungen, eingesetzt. Diese und deren Herstellungsverfahren werden beispielsweise in der EP 0010589 A1 und EP 0047452 A1 beschrieben. Alternative Synthesewege sind beispielsweise die katalytische Carbonylierung von Nitro-Verbindungen bzw. Aminen oder die Umsetzung primärer Amine mit Di-tert-butyldicarbonat (Diboc) in Anwesenheit von 4-(Dimethylamino)-pyridin (DMAP).

Gewöhnliche Polyurethan- und Polyisocyanuratschaumstoffe für den Einsatz als Dämm- und Dichtstoffe werden üblicherweise auf Basis von Mischungen aus 4,4'-, 2,4'- und 2,2'-Diphenylmethandiisocyanaten (MDI) und Polyphenyl-polymethylen-polyisocyanaten (p-MDI) hergestellt. Solche Schaumstoffe sind allerdings weder transluzent noch farb- noch lichtecht und neigen zu starker Verfärbung. Diese anfängliche Vergilbung geht später oft in eine bräunliche Verfärbung über. Daher sind handelsübliche Polyurethan- und Polyisocyanuratschaumstoffe auf Basis aromatischer Isocyanate (mit einem Anteil von über 20 Gew.-% an dem gesamten Isocyanat und einer Kennzahlen unter 200, das heißt ein beträchtlicher Anteil der aromatischen Isocyanate liegt im Produkt als Umsetzung mit einem Alkohol oder einem Amin als Urethan oder Harnstoff vor) per se nicht geeignet für die Herstellung transluzenter Schäume.

Gemäß der vorliegenden Erfindung können überraschenderweise solche aromatischen Isocyanate in bis zu 60% Abmischung mit aliphatischen Isocyanaten bei hohen Kennzahlen von mindestens 200, bevorzugt von mindestens 300 und besonders bevorzugt von mindesten 500 zur Herstellung von farbstabilen und transparente Schäumen benutzt werden. Wie oben dargelegt, ist die Anwesenheit von Urethangruppen im fertigen Schaum unerwünscht. Deswegen werden als Bestandteile der Komponente B vorzugsweise Polyisocyanate ausgewählt, die einen geringen Gehalt dieser Gruppen aufweisen und vorzugsweise frei davon sind. Diese Bedingung erfüllen alle monomeren Diisocyanate. Bei der Verwendung von oligomeren Polyisocyanaten werden Verbindungen bevorzugt, deren kombinierter Gehalt an Urethangruppen gering ist. Die Polyisocyanatkomponente B in ihrer Gesamtheit weist vorzugsweise einen kombinierten Gehalt an Urethangruppen (-NH-CO-O-) von höchstens 5,0 Gew.-%, bevorzugt von höchstens 3,5 Gew.-%, besonders bevorzugt von höchstens 2,5 Gew.-%, bezogen auf ihr Gesamtgewicht auf.

Der Gesamtgehalt an Wasser und NH-Gruppen in der Rezeptur ist bevorzugt so zu wählen, dass Harnstoffgruppen (-NH-CO-NH-) im fertigen Schaum höchstens 4,5 Gew.-%, bevorzugt von höchstens 2,8 Gew.-%, besonders bevorzugt von höchstens 1,3 Gew.-%, bezogen auf das Gesamtgewicht des fertigen Schaumes aufweisen.

Die Anzahl der Hydroxylgruppen ist so zu wählen, dass Urethangruppen (-NH-CO-O-) im fertigen Schaum höchstens 6 Gew.-%, bevorzugt von höchstens 4,5 Gew.-%, besonders bevorzugt von höchstens 3,5 Gew.-%, bezogen auf das Gesamtgewicht des fertigen Schaumes aufweisen.

Die Polyisocyanatkomponente B weist vorzugsweise eine Viskosität gemäß DIN EN ISO 3219:1994-10 bei 23°C von 5 bis 30000 mPas auf, stärker bevorzugt von 200 bis 25000 mPas, am stärksten bevorzugt von 800 bis 22500 mPas.

Es ist vorteilhaft, wenn mindestens 30 Gew.-%, insbesondere 60 Gew.-%, basierend auf dem Gesamtgewicht von B, aliphatische Polyisocyanate verwendet werden. Besonders bevorzugt sind Isocyanuratgruppen-haltige Polyisocyanate auf Basis von 1,6-Diisocyanatohexan (HDI) oder 1,5 Diisocyanatopentan (PDI) mit einem NCO-Gehalt < 25 % und einer mittleren NCO-Funktionalität von > 2.

In einer besonderen Ausführungsform können oligomere Polyisocyanate, die aromatische Di- und / oder Trisocyanate enthalten, mit einem Anteil von bis zu 70 Gew.-% eingesetzt werden, wenn diese bei ihrer Herstellung statistisch mit aliphatischen Isocyanaten zu oligomeren Polyiscyanaten mit einem Isocyanatgehalt von < 25% co-trimerisiert wurden. Besonders bevorzugt sind Isocyanuratgruppen-haltige Polyisocyanate auf Basis von 2,4/2,6-Toluendiisocyanat (2,4-TDI, 2,6-TDI). Ebenfalls, aber weniger bevorzugt, können auch Diphenylmethan-2,4'-diisocyanat und / oder Diphenylmethan-4,4'-diisocyanat eingesetzt werden. Die vorgenannten aromatischen Diisocyanate werden bevorzugt als Mischisocyanurate mit HDI oder PDI hergestellt um den vorgenannten Isocyanatgehalt zu erreichen. Deswegen sind aus TDI in Kombination mit HDI und/oder PDI aufgebaute Oligomere besonders bevorzugt.

In einer bevorzugten Ausführungsform werden zur Kompatibilisierung, insbesondere in Gegenwart polarer, chemischer Treibmittel wie Wasser und/oder Ameisensäure, hydrophilierte Isocyanuratgruppen-haltiges Polyisocyanate B2 eingesetzt. In einer bevorzugten Ausführungsform ist B2 in mindestens 1 Gew.-Teil, bevorzugt mindestens 3 Gew.-Teilen, stärker bevorzugt mindestens 5 Gew.-Teilen, basierend auf der Summe der Gew.-Teile von B1 bis B3, welche auf 100 Gew.-Teile normiert werden. In einer weiteren bevorzugten Ausführungsform ist B2 in 3 bis 35 Gew.-Teilen, bevorzugt in 5 bis 15 Gew.-Teilen, stärker bevorzugt in 8 bis 12 Gew.-Teilen, vorhanden, basierend auf der Summe der Gew.-Teile von B1 bis B3, welche auf 100 Gew.-Teile normiert werden. Covestro Deutschland AG bietet solche Verbindungen kommerziell unter dem Namen Bayhydur® für den Einsatz als Vernetzer in der Lackindustrie an. Insbesondere ist das kommerziell erhältliche hydrophilierte Isocyanat Bayhydur® 3100 mit einem NCO-Gehalt von 17,4 Gew.-%, einer mittleren NCO-Funktionalität von 3,2 (nach GPC), einem Gehalt an monomerem HDI von maximal 0,1 Gew.-%, einer Viskosität (23°C) von 2800 mPas geeignet und ein Beispiel für ein hydrophiles Isocyanuratgruppen-haltiges Polyisocyanat auf Basis von 1,6-Diisocyanatohexan (HDI). Andere hydrophile Isocyanatgruppen-haltige Polyisocyanate anderer Hersteller kommen hier ebenfalls in Betracht. Ebenso ist eine *in situ* Herstellung von hydrophilierten Isocyanaten vor oder während der Schäumungsreaktion durch Zusatz geeigneter mono- oder polyfunktioneller hydrophiler Isocyanat-reaktiver Verbindungen wie z.B. Polyether, Polyester und Sulfonsäuregruppen tragende Verbindungen und anderer dem Fachmann bekannten Verbindungen möglich.

Besonders bevorzugt ist eine Polyisocyanatkomponente B die einen Anteil an monomeren Diisocyanaten in der Polyisocyanatzusammensetzung B von höchstens 50 Gew.-%, vorteilhafter von höchstens 25% und insbesondere vorteilhaft von höchstens 10 Gew.-%, jeweils bezogen auf das Gesamtgewicht der Polyisocyanatkomponente B, aufweist. Die Reaktionsenthalpie der Trimerisierungsreaktion zu Polyisocyanaten ist mit -75 kJ/mol NCO sehr hoch. Dies gilt insbesondere für die Herstellung von Polyisocyanuratschäumen, da poröse Materialien im Allgemeinen und Schäume im Besonderen eine sehr geringe Wärmeleitfähigkeit besitzen und damit eine adiabatische Reaktionsführung erfolgt, was zu einem starken Temperaturanstieg und damit häufig zu starker Vergilbung führt. Daher ist eine Reaktion ausgehend von monomeren Diisocyanaten, besonders bei monomeren Diisocyanaten mit hohem Isocyanatgehalt von mindestens 50% (z.B. BDI, PDI, HDI, TIN), nicht für großvolumige Schaumkörper, unter den dabei herrschenden nahezu adiabatischen Bedingungen bevorzugt, sondern bevorzugt z.B. für die Anwendung in Doppelbandanlagen zur Herstellung von Paneelen oder andere Anwendungen wobei eine gute Temperatur bzw. Reaktionskontrolle möglich ist. Die monomerarme Polyisocyanatkomponente B und die darin enthaltenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten. Die Herstellung von Polyisocyanuraten, zum Beispiel beschrieben in der US 3645979A, wird beispielsweise im Stand der Technik hauptsächlich ausgehend von flüssigen monomeren Diisocyanaten (z.B. Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan (H$_{12}$MDI), Toluoldiisocyanat (TDI), Diphenylmethandiisocyanate (4,4'-Diphenylmethandiisocyanat, 2,4'-Diphenylmethandiisocyanat, 2,2'-Diphenylmethandiisocyanat) (MDI), Naphthalin-1,5-diisocyanat (NDI), 2,5- und 2,6-Bis(isocyanatomethyl)bicyclo[2.2.1]heptan (NBDI), 1,4-Butandiisocyanat (BDI), aliphatischer wie aromatischer Natur beschrieben.

Bevorzugte Verbindungen für die Polyisocyanatkomponente B sind jene auf Basis von Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan (H$_{12}$MDI), Toluoldiisocyanat (TDI), 2,5- und 2,6-Bis(isocyanatomethyl)bicyclo[2.2.1]heptan (NBDI), 1,4-Butandiisocyanat (BDI),sowie Abmischungen mit ihren Diisocyanat Vorläufern sowie anderen kompatiblen und co-löslichen isocyanatfunktionellen Prepolymeren wie Uretdione, Biurete, Harnstoffe, asymetrische Trimere, Mischtrimere verschiedener Isocyanate und andere die bei der Herstellung von Trimeren Isocyanuratverbindungen mit einer Funktionalität von mindestens 2 anfallen und literaturbekannt sind.

Besonders bevorzugt sind Isocyanuratgruppen-haltige Polyisocyanate auf Basis von 1,5-Diisocyanatopentan (PDI) und/oder auf Basis von 1,6-diisocyanatohexan (HDI). Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt. Das PDI-basierte Polyisocyanat hat einen NCO-Gehalt von 21,8%, eine NCO-Funktionalität von 3,5, einen Gehalt an monomeren PDI von 0,09% und eine Viskosität von 9850 mPas (23°C).

Ebenfalls bevorzugt ist ein Isocyanuratgruppen-haltiges Polyisocyanat auf Basis von 1,6-Diisocyanatohexan (HDI) mit einem NCO-Gehalt von 21,8 Gew.-%, einer mittleren NCO-Funktionalität von 3,5 (nach GPC), einem Gehalt an monomerem HDI von maximal 0,1 Gew.-% und einer Viskosität von 3.000 mPas (23 °C) oder Isocyanuratgruppen-haltiges Polyisocyanat auf Basis von 1,6-Diisocyanatohexan (HDI) mit einem NCO-Gehalt von 21,7 Gew.-%, einer mittleren NCO-Funktionalität von 3,1 (nach GPC), einem Gehalt an monomerem HDI von maximal 0,1 Gew.-% und einer Viskosität von 1.200 mPas (23 °C) oder Isocyanuratgruppen-haltiges Polyisocyanat auf Basis von 1,6-Diisocyanatohexan (HDI) mit einem NCO-Gehalt von 20,0 Gew.-%, einer mittleren NCO-Funktionalität von 4,2 (nach GPC), einem Gehalt an monomerem HDI von maximal 0,2 Gew.-% und einer Viskosität von 22.700 mPas (20 °C). Ebenfalls bevorzugt ist ein Isocyanuratgruppen-haltiges Polyisocyanat auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPas (23 °C), ein Isocyanuratgruppen-haltiges Polyisocyanat auf Basis von 1,6-Diisocyanatohexan (HDI) mit einem NCO-Gehalt von 20 Gew.-%, einer mittleren NCO-Funktionalität von 4,2 (nach GPC), einem Gehalt an monomerem HDI von kleiner 0,25 Gew.-% und einer Viskosität von 16000 mPas (23 °C), ein hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPas (23 °C), ein Isocyanuratgruppen-haltiges Polyisocyanat auf Basis von 1,6-Diisocyanatohexan (HDI) mit einem NCO-Gehalt von 21,7 Gew.-%, einer mittleren NCO-Funktionalität von 3,5 (nach GPC), einem Gehalt an monomerem HDI von maximal 0,1 Gew.-% und einer Viskosität von 3000 mPas (23 °C) und ein Isocyanuratgruppen-haltiges Polyisocyanat auf Basis von 1,5-Diisocyanatopentan (PDI) mit einem NCO-Gehalt von 21,5 Gew.-%, einer mittleren NCO-Funktionalität von 3 (nach GPC), einem Gehalt an monomerem PDI von weniger als 0,3 Gew.-% und einer Viskosität von 9500 mPas (23 °C). Ein Isocyanuratgruppen-haltiges Polyisocyanat auf Basis von 2,4-Toluendiisocyanat und 1,6-Diisocyanatohexan mit einem NCO-Gehalt von 24,4 Gew.-% (berechnet), einer mittleren NCO-Funktionalität von 3 und einer Viskosität < 100.000 MPas bei 23°C ist besonders bevorzugt.

Die mittlere NCO-Funktionalität der Komponente B wird, sofern nicht anders beschrieben, mittels Gelpermeationschromatographie (GPC) bestimmt. Die Funktionalität ist ein Ausdruck für die Zahl der reaktiven Gruppen pro Molekül, d. h. für die Zahl der potentiellen Verknüpfungsstellen bei der Ausbildung eines Netzwerkes. Polyisocyanate, wie sie z, B. bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der Gelpermeationschromatographie ermittelten Molekulargewichtsverteilung berechnet.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Besonders bevorzugt sind Polyisocyanate mit Anteilen von Isocyanuratgruppen von > 10 Gew.-%, ganz besonders bevorzugt > 20 Gew.-% in der Polyisocyanatkomponente B.

Unabhängig vom der zu Grunde liegenden oligomeren Struktur (Uretdion-, Isocyanurat-, Allophanat-, Biuret-, Iminooxadiazindion- und/oder Oxadiazintrionstruktur) weist die beim erfindungsgemäßen Verfahren einzusetzende Polyisocyanatkomponente B und/oder die darin enthaltenen oligomeren Polyisocyanate vorzugsweise eine (mittlere) NCO-Funktionalität von 2,0 bis 6, vorzugsweise von 2,3 bis 4,0 auf.

Besonders bevorzugte Ergebnisse stellen sich ein, wenn die erfindungsgemäß einzusetzende Polyisocyanatkomponente B einen Gehalt an Isocyanatgruppen von 15 bis 40 Gew.-%, vorzugsweise von 20 bis 30 Gew.-%, jeweils bezogen auf die gesamte Polyisocyanatzusammensetzung B, aufweist.

Geeignete kommerziell erhältliche Polyisocyanate sind unter anderem Desmodur® XP 2675, Desmodur® XP 2489, Desmodur® N3300, Desmodur® N3600, Desmodur® H, Desmodur® N3200, Bayhydur® 3100, Desmodur® N eco 7300, Desmodur® HL BA und Desmodur® HL EA und Polyisocyanate erhältlich durch Polymerisation von Desmodur® H, Desmodur® I, Desmodur® W, Desmodur T100, Desmodur T80, Desmodur T65, Desmodur 44M Flakes, Desmodur 44M Liquid, Desmodur Vers. Prod. PU 1806 - alle kommerziell erhältlich von der Covestro Deutschland AG.

Erfindungsgemäße Polyurethan- oder Polyisocyanuratschaumstoffe

In einer bevorzugten Ausführungsform weist die Schaumdicke des erfindungsgemäßen Schaumstoffs senkrecht zur Lichteinstrahlung mindestens ein Multiplikator von 3 bevorzugt 5 besonders bevorzugt 10 * Zellen Dicke mit Bezug auf den durchschnittlichen Zellendurchmesser auf.

In einer weiteren bevorzugten Ausführungsform weist der erfindungsgemäße Schaumstoff einen Lambda-Wert von kleiner 0,08 bevorzugt kleiner 0,06 besonders bevorzugt kleiner 0,05 W/(m*K), gemessen gemäß DIN 52616:1977-11 auf.

In einer weiteren bevorzugten Ausführungsform besitzt der erfindungsgemäße Schaumstoff einen kristallinen Anteil kleiner 20% bevorzugt kleiner 10% besonders bevorzugt kleiner 2 %. In einer besonders bevorzugten Ausführungsform enthalten die erhaltenen erfindungsgemäßen Schaumstoffe kristalline Anteile, deren Kristallgrößen sichtbares Licht nicht merklich brechen.

Allgemeines Herstellungsverfahren

Schäumungsprozesse finden im Allgemeinen entweder chemisch oder physikalisch statt. Bei der Herstellung von PUR/PIR Schäume werden die eingesetzten Komponenten (A und B) entweder durch eine Hochdruckvermischung oder durch eine Niederdruckvermischung (meist Stachelrührer) vermischt. Bei Mischungen verschiedener Isocyanate werden diese bevorzugt zuvor abgemischt. Gleiches gilt für eine Mischung der A-Komponenten. Dabei wird in bevorzugten Ausführungsformen des Standes der Technik absichtlich Luft eingemischt, da die Mikroluftbläschen Nukleierungskeime sind und somit ein feinzelligerer Schaum entsteht, was insbesondere für Isolierhartschäume gewünscht ist.

Die erfindungsgemäßen Schaumstoffe werden in einer bevorzugten Ausführungsform durch ein erfindungsgemäßes Verfahren erhalten, in dem die Reaktionskomponenten unter weitgehender Vermeidung von Mikroblasen, bevorzugt mit einem Blasendurchmesser < 0,5 mm, in geeigneten Mischaggregaten gemischt werden. Dabei ist eine weitgehende Vermeidung von Mikroblasen bevorzugt, welche zum Beispiel durch eine optisch transparente oder transluzente Mischung im Gegensatz zu einer milchig trüben Mischung gekennzeichnet ist. Man kann hierzu bereits als Indikator die Trübung der Zusammensetzung nach DIN EN ISO 7027 direkt nach dem Vermischen messen. Ohne an eine Theorie gebunden zu sein wird davon ausgegangen, dass je weniger Mikroblasen im Reaktionsgemisch nach der Vermischung enthalten sind, desto höher wird anschließend die Lichttransmission sein. Durch die Mikroblasen, welche als Kondensationskeime für die bevorzugt chemischen Treibmittel wirken können, wird das Licht gestreut und der daraus entstehende Schaum hat eine geringere Lichttransmission.

Es können mit konventionellem Herstellungsverfahren, d.h. unter Verwendung üblicher Mischaggregate / Rührer hohe Lichttransmissionen erreicht werden, wenn bevorzugt sehr langsam reagierende Schaumsysteme verwendet werden, das heißt die Schäume reagieren erst dann, wenn das anfänglich eingemischte Nukleierungsmittel (Keimzellen), wie z.B. Luft, sich wieder weitgehend, d.h. im Wesentlichen, aufgelöst hat bzw. die sehr kleinen Bläschen zu größeren (etwa > 0,5 mm) koalesziert sind und nach oben gestiegen sind bzw. sich verflüchtigt haben. Dem Fachmann ist es bekannt, dass er durch die Auswahl geeigneter Katalysatoren und Treibmittel die Reaktionsgeschwindigkeit der Schaumsysteme steuern kann. Für einen wirtschaftlichen Einsatz der gewünschten transluzenten und temperaturisolierenden Schäume ist allerdings eine Abbindezeit von < 2h, bevorzugt < 1h, ganz bevorzugt < 30min und ganz besonders bevorzugt < 15 min, einzustellen.

Blasenfreies Herstellverfahren

In einem bevorzugten Herstellungsverfahren werden beim Vermischen der Substanzen gasförmige Nukleierungsmittel, hier insbesondere Luft (sogenannte Beimischluft), im Wesentlichen ausgeschlossen. Die Reaktionskomponenten sind folglich im Wesentlichen frei von diesen gasförmigen Nukleierungsmitteln. Durch das Fehlen von Luft oder allgemein, durch das Fehlen gasförmiger Nukleierungsmittel, entsteht erfindungsgemäß ein deutlich grobzelligerer Schaum, der eine wesentlich größere Lichttransmission hat. Feinzellige Schäume streuen das Licht stärker, was zu Lasten der Lichttransmission geht.

Die vorliegende Erfindung betrifft insbesondere die folgenden Gegenstände:
Nach einem ersten Gegenstand betrifft die Erfindung ein Verfahren zur Herstellung von transluzenten Polyurethan- und Polyisocyanuratschaumstoffen durch Umsetzung einer Komponente A umfassend, bevorzugt bestehend aus,

A1 mindestens ein, mit der Komponente B reaktives, Polyol, bevorzugt mit einem Molekulargewicht < 400g/mol, stärker bevorzugt < 310 g/mol oder < 200 g/mol oder < 150 g/mol und/oder das bevorzugt mindestens ein hydrophiles Polyol, wie beispielsweise Glykole und EO-Polyetherpolyole, ist;

A2 gegebenenfalls mindestens ein Amin;

A3 Wasser gegebenenfalls in Anwesenheit von Ameisensäure oder mindestens einem physikalischen Treibmittel oder Mischungen davon und bevorzugt gegebenenfalls in Anwesenheit von Ameisensäure und / oder physikalischen Treibmitteln;

A4 mindestens einen Schaumstabilisator wie beispielsweise Silikontenside bevorzugt aus der Gruppe der Siloxan-Polyoxyalkylen-Copolymere und / oder Polydimethylsiloxan-Polyoxy-alkylen-Copolymere

A5 gegebenenfalls Hilfs- und/oder Zusatzstoffe wie Stabilisatoren, UV-Schutzmittel, Initiatoren, Additive, Pigmente, Füllstoffe oder eine Kombination davon;

A6 gegebenenfalls mindestens ein Flammschutzmittel, bevorzugt farblose und nicht verfärbende Flammschutzmittel, stärker bevorzugt Phosphor haltige Verbindungen, noch stärker bevorzugt Phosphate, insbesondere bevorzugt Triethylphosphat;

A7 mindestens einen Katalysator;

und eine Komponente B, deren Gehalt an aromatischen Polyisocyanaten wenigstens 5 Gew.-% und höchstens 70 Gew.-% beträgt, umfassend,

B1 mindestens eine aliphatische oder cycloaliphatische Polyisocyanatkomponente oder eine Kombination davon,

B2 gegebenenfalls mindestens ein hydrophiliertes Isocyanat, bevorzugt in 3 bis 25 Gew.-Teilen, bevorzugt in 5 bis 15 Gew.-Teilen, stärker bevorzugt in 8 bis 12 Gew.-Teilen;

B3 größer oder gleich 10 Gew.-Teile und bis zu 70 Gew.-Teile bevorzugt bis zu 50 Gew.-Teile und ganz besonders bevorzugt bis zu 40 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden, bevorzugt auf Basis von TDI und / oder auf Basis von Mischtrimerisaten von TDI und HDI und / oder TDI und PDI.

wobei die Gewichtsteile von B2 und B3 bezogen sind auf die Summe der Gewichtsteile von B1 bis B3, welche auf 100 Gew.-Teile normiert werden, dadurch gekennzeichnet, dass die Umsetzung der Komponente A mit der Komponente B bei einer Isocyanat-Kennzahl von wenigstens 200, bevorzugt 250 bis 600, stärker bevorzugt 300 bis 450, durchgeführt wird, und wobei bevorzugt die Reaktionsmischung vor dem Einsatz der Treibreaktion klar ist und eine Trübung von weniger als 90%, bevorzugt weniger als 70% und stärker bevorzugt weniger als 50% nach DIN EN ISO 7027:2016-11 aufweist;

und wobei die erhaltenen transluzenten Polyurethan- und Polyisocyanuratschaumstoffe eine Lichttransmission nach EN ISO 13468-2:2006 von mindestens 10%, bevorzugt von mindestens 14 oder 20%, stärker bevorzugt von mindestens 10% bis 80 %, noch stärker bevorzugt mindestens 20 bis 60%; am stärksten bevorzugt von mindestens 20% bis 50% oder 55% jeweils gemessen bei einer Schichtdicke des Schaumstoffs von 20 mm, aufweisen; und

wobei die erhaltenen transluzenten Polyurethan- und Polyisocyanuratschaumstoffe einen Haze von mindestens 70%, bevorzugt mindestens 80%, stärker bevorzugt mindestens 90%, noch stärker bevorzugt mindestens 98%, am stärksten bevorzugt mindestens 99%, bestimmt nach ASTM D1003-13, jeweils gemessen bei einer Schichtdicke des Schaumstoffs von 20 mm, aufweisen.

Nach einem zweiten Gegenstand betrifft die Erfindung ein Verfahren gemäß Gegenstand 1, dadurch gekennzeichnet, dass der erhaltene transluzente Polyurethan- oder Polyisocyanuratschaumstoff eine Wärmeleitfähigkeit (gemessen gemäß DIN 52612:2-1984-06) von kleiner als 100 mW/(m*K), bevorzugt von kleiner als 80 mW/(m*K) und insbesondere bevorzugt von kleiner als 60 mW/(m*K), am stärksten bevorzugt von kleiner als 50 mW/(m*K) aufweist.

Nach einem dritten Gegenstand betrifft die Erfindung ein Verfahren gemäß einem der vorstehenden Gegenstände, dadurch gekennzeichnet, dass der erhaltene transluzente Polyurethan- oder Polyisocyanuratschaumstoff einen NCO-Modifizierungsgrad von mindestens 30 Mol% bevorzugt von 50 bis 95% Mol% und besonders bevorzugt von 60 bis 85 Mol% aufweist.

Der Modifizierungsgrad ist dabei der Anteil (in Mol%) der insgesamt vorhandenen reaktiven NCO-Gruppen, der an einer Modifizierungsreaktion beteiligt ist, also letztendlich in eine funktionelle Gruppe der Art Allophanat oder Biuret, Uretdion, Isocyanurat oder Carbodiimid/Uretonimin umgewandelt wird. Dabei kann der Modifizierungsgrad sowie die Isocyanuratbildung durch Wahl des Katalysators, im Folgenden auch als Trimerisierungskatalysator bezeichnet, beeinflusst werden. Geeignete Katalysatoren werden nachstehend offenbart.

Nach einem vierten Gegenstand betrifft die Erfindung ein Verfahren gemäß einem der vorstehenden Gegenstände, dadurch gekennzeichnet, dass der erhaltene transluzente Polyurethan- oder Polyisocyanuratschaumstoff farblos bis weiß ist und einen Yellowing Index (gemessen nach ASTM E 313:2015) von kleiner 30, bevorzugt kleiner 20 und besonders bevorzugt von kleiner 15 aufweist, jeweils bezogen auf eine Schichtdicke des Schaumstoffs von 20 mm.

Nach einem fünften Gegenstand betrifft die Erfindung ein Verfahren gemäß einem der vorstehenden Gegenstände dadurch gekennzeichnet, dass der erhaltene Polyurethan- oder Polyisocyanuratschaumstoff als ein zu mindestens 40%, bevorzugt mindestens 50%, stärker bevorzugt mindestens 60% geschlossenzelliger Polyurethan- oder Polyisocyanuratschaumstoff vorliegt. Neben der Lichttransmission hat die Zellgröße ebenfalls einen Einfluss auf die Wärmeleitfähigkeit. Die Wärmeleitfähigkeit nimmt mit kleiner werdender Zellgröße ab, bevorzugt sind die vorstehend genannten Bereiche. Die Geschlossenzelligkeit wird dabei an einem Polyurethan- oder Polyisocyanuratschaumstoff bestimmt, welcher in einem offenen Gefäß oder auf einer Platte nach Schneiden in einer Dicke von bevorzugt > dem 10* mittleren Zelldurchmesser hergestellt wurde, damit der Effekt der aufgeschnittenen Zellen vernachlässigt werden kann. Die Bestimmung kann gemäß DIN EN ISO 4590:1986 erfolgen.

Nach einem sechsten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine mittlere Zellgröße zwischen 1,0 mm und 20 mm, stärker bevorzugt zwischen 1,0 mm und 10,0 mm oder 1,0 mm und 6,0 mm, und besonders bevorzugt zwischen 2,0 mm und 5,0 mm, aufweist.

Die Zellgröße wird dabei unter Verwendung eines Lichtmikroskops bestimmt. Dabei wird der größte Abstand zwischen zwei Zellkanten als Zellgröße definiert.

Nach einem siebten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine Rohdichte des erhaltenen Schaums von höchstens 300 kg/m$^3$, bevorzugt höchstens 200 kg/m$^3$, besonders bevorzugt höchstens 100 kg/m$^3$ und ganz besonders bevorzugt höchstens 50 kg/m$^3$ (bestimmt mittels DIN EN ISO 845:2009-10) aufweist.

Nach einem achten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine mittlere Zellstegdicke von mindestens 0,05 mm bevorzugt mindestens 0,1 mm und/oder besonders bevorzugt höchstens 0,5 mm, stärker bevorzugt höchstens 0,4 mm aufweist.

Die Zellstegdicke wird dabei unter Verwendung eines Lichtmikroskops bestimmt. Dabei wird die Dicke eines Zellsteges in der Mitte zwischen zwei Zwickeln als Zellstegdicke definiert.

Nach einem neunten Gegenstand betrifft die Erfindung ein Verfahren gemäß einem der vorstehenden Gegenstände, dadurch gekennzeichnet, dass die Komponente A enthält:

10 bis 99,3 Gew.-Teile, bevorzugt 20 bis 90 Gew.-Teile, stärker bevorzugt 30 bis 80 Gew.-Teile, am stärksten bevorzugt 50 bis 70 Gew.-Teile von A1;
0 bis 10 Gew.-Teile, bevorzugt 0 bis 5 Gew.-Teile, am stärksten bevorzugt 0 bis 2 Gew.-Teile von A2;
0,1 bis 80 Gew.-Teile, bevorzugt 15 bis 60 Gew.-Teile, stärker bevorzugt 25 bis 45 Gew.-Teile von A3;
0,0 bis 50 Gew.-Teile, bevorzugt 0,1 bis 40 Gew.-Teile, stärker bevorzugt 0,5 bis 30 Gew.-Teile von A5;
0,0 bis 80 Gew.-Teile, bevorzugt 0,1 bis 60 Gew.-Teile, stärker bevorzugt 0,5 bis 40 Gew.-Teile von A6;
wobei die Summe von A1 bis A7 100 Gew.-Teile ergibt.

Nach einem zehnten Gegenstand betrifft die Erfindung ein Verfahren gemäß einem der vorstehenden Gegenstände, dadurch gekennzeichnet, dass

0,5 bis 25 Gew.-Teile, bevorzugt 5 bis 20 Gew.-Teile von A4;
0,1 bis 60 Gew.-Teile, bevorzugt 1 bis 50 Gew.-Teile, stärker bevorzugt 2 bis 45 Gew.-Teile, am stärksten bevorzugt 5 bis 35 Gew.-Teile von A7 enthalten sind, bezogen auf 100 Gew.-Teile die sich ergeben aus der Summe von A1 bis A7.

Nach einem elften Gegenstand betrifft die Erfindung ein Verfahren gemäß einem der vorstehenden Gegenstände, dadurch gekennzeichnet, dass im Wesentlichen keine gasförmigen Nukleierungsmittel eingetragen durch den Mischprozess, insbesondere Luft, bei der Reaktion anwesend sind.

Nach einem zwölften Gegenstand betrifft die Erfindung ein Verfahren gemäß einem der vorstehenden Gegenstände, dadurch gekennzeichnet, dass die Abbindezeit < 2h, bevorzugt <lh, besonders bevorzugt < 30 min und ganz besonders bevorzugt < 15 min beträgt und gegebenenfalls geeignete Katalysatoren wie Kaliumacetat oder Kaliumethylhexanoat verwendet werden.

Nach einem dreizehnten Gegenstand betrifft die Erfindung ein Verfahren gemäß einem der vorstehenden Gegenstände, dadurch gekennzeichnet, dass das Vermischen in einem Mischer mit vorgeschalteter Entgasungseinheit durchgeführt wird.

Nach einem vierzehnten Gegenstand betrifft die Erfindung einen transluzenten Polyurethan- oder Polyisocyanuratschaumstoff, welcher durch ein Verfahren der vorstehenden Gegenstände erhalten wurde.

Nach einem fünfzehnten Gegenstand betrifft die Erfindung ein Mehrschichtverbundelement, in welchem der transluzente Polyurethan- oder Polyisocyanuratschaumstoff gemäß Gegenstand 14 zwischen zwei, bevorzugt transluzenten oder transparenten, Elementen vorliegt.

Nach einem sechzehnten Gegenstand betrifft die Erfindung ein Mehrschichtverbundelement gemäß Gegenstand 15, dadurch gekennzeichnet, dass die zwei, bevorzug transluzenten oder transparenten, Elemente Folien oder Platten sind, besonders bevorzugt sind diese hergestellt aus den Materialien Glas, Polymethylmethacrylat oder Polycarbonat. In einer weiteren bevorzugten Ausführungsform sind beide Elemente aus unterschiedlichem Material.

Nach einem siebzehnten Gegenstand betrifft die Erfindung die Verwendung des transluzenten Polyurethan- oder Polyisocyanuratschaumstoffs gemäß Gegenstand 14 oder des Mehrschichtverbundelements gemäß Gegenstand 15 oder 16 als Bauelement, insbesondere als Dachelement wie ein Lichtband, eine Lichtkuppel, als Wandelement wie ein Paneel, als Bodenelement, in Gebäuden, in Fahrzeugen oder Lampen oder in Kombination mit eingelassenen Lampen als Leuchtelement, insbesondere in Paneel-Form.

Beispiele und Vergleichsbeispiele:

Die vorliegende Erfindung wird im Folgenden anhand von Beispielen weiter erörtert, ist jedoch nicht auf diese beschränkt:

Verwendete Komponenten:

Trimerisierungs- Katalysatoren

- Desmorapid® 30HB14 (36 Gew.-% Kaliumformiat, 64 Gew.-% Ethylenglykol)

Katalysatoren

- Dimethylzinnneodecanoat (Formrez UL-28)

Verwendete Polyole A):

- Ethylenglykol

- Polyether V531 (Hydroxylzahl 550 mg KOH/g, 100% prim. OH-Gruppen, Funktionalität 3)

Verwendete Flammschutzmittel:

- Triethylphosphat (TEP)
- Tris(2-chlorisopropyl)phosphat (TCPP)

Schaumstabilisatoren (Polyether-Polydimethylsiloxan-Copolymere):

- Tegostab® B8490

Verwendete Iso- und Polyisocyanate B)

- Desmodur® N3600: Isocyanuratgruppen-haltiges Polyisocyanat auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPas (23 °C)

- Desmodur® N3200: Biuretgruppen-haltiges Polyisocyanat auf Basis von 1,6-Diisocyanatohexan (HDI) mit einem NCO-Gehalt von 23,0 Gew.-%, einem Gehalt an monomerem HDI von maximal 0,4 Gew.-% und einer Viskosität von 5380 mPas (20 °C)

- Bayhydur® 3100: Hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPas (23 °C)

- Desmodur HL: Isocyanuratgruppen-haltiges Polyisocyanat (37,5 Gew.-%) auf Basis von 1,6-Diisocyanatohexan (HDI) und 2,4-Toluendiisocyanat mit einem NCO-Gehalt von 24,4 Gew.-% (berechnet), gelöst in 62,5 Gew.-% Desmodur® N3600. Die Mischung hat eine Viskosität von ca. 53.000 mPas (23°C).

**Beispiele**

Beispiel 1

Eine Isocyanat-reaktive Zusammensetzung aus 1,30 g Ethylenglykol, 1,04 g Wasser, 1,20 g Schaumstabilisator Tegostab B8490, 2,40 g Katalysator Desmorapid® 30HB14 und 0,90 g Katalysator Formrez UL-28 wurde mit einem Isocyanatgemisch aus 38,21g Desmodur® HL gelöst in 63,64 g Desmodur® N3600, 11,30 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 110 Sekunden abgebunden. Danach wurde der Schaum weitere 30 Minuten bei 70° im Ofen getempert.

Die berechnete Kennzahl ist 300.

Der Schaumstoff hatte eine Lichttransmission von 17,2 % (Dicke 20 mm).

Die Zellgröße betrug ca. 1,0 bis 3,0 mm.

Beispiel 2

Eine Isocyanat-reaktive Zusammensetzung aus 1,04 g Ethylenglykol, 0,84 g Wasser, 1,10 g Schaumstabilisator Tegostab B8490, 2,20 g Katalysator Desmorapid® 30HB14, 0,82 g Katalysator Formrez UL-28 und 10,0 g Triethylphosphat wurde mit einem Isocyanatgemisch aus 15,92g Desmodur® HL gelöst in 26,53 g Desmodur® N3600, 42,44 g weiteres Desmodur® N3600 9,42 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 240 Sekunden abgebunden. Danach wurde der Schaum weitere 60 Minuten bei 70° im Ofen getempert.

Die berechnete Kennzahl ist 300.

Der Schaumstoff hatte eine Lichttransmission von 25,2 % (Dicke 20 mm).

Die Zellgröße betrug ca. 2,0 bis 4,0 mm.

Beispiel 3

Eine Isocyanat-reaktive Zusammensetzung aus 1,05 g Ethylenglykol, 0,85 g Wasser, 0,79 g Schaumstabilisator Tegostab B8490, 0,34 g Katalysator Desmorapid® 30HB14, 0,11 g Katalysator Formrez UL-28 und 9,73 g Triethylphosphat wurde mit einem Isocyanatgemisch aus 22,00g Desmodur® T100, 68,00 g Desmodur® N3600 und 10,00 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 600 Sekunden abgebunden. Danach wurde der Schaum weitere 60 Minuten bei 70° im Ofen getempert.

Die berechnete Kennzahl ist 500.

Der Schaumstoff hatte eine Lichttransmission von 14,8% (Dicke 20 mm).

Die Zellgröße betrug ca. 2,0 bis 4,0 mm.

Beispiel 4

Eine Isocyanat-reaktive Zusammensetzung aus 3,12 g Ethylenglykol, 0,21 g Wasser, 1,58 g Schaumstabilisator Tegostab B8490, 1,58 g Katalysator Kaliumacetat, und 0,78 g Katalysator Formrez UL-28 wurde mit einem Isocyanat-c-Pentan-Gemisch aus 90,00 g Desmodur® N3600, 10,00 g Desmodur® N3200 und 3,09 g cyclo-Pentan für 30 Sekunden mit einem Speedmixer bei 2000 U/min quasi blasenfrei vermischt und vorsichtig in eine Form ausgegossen. Danach wurde die Form in einen Ofen bei 70°C gestellt. Der Schaum hatte eine Klebfreizeit von 120 Sekunden abgebunden. Danach wurde der Schaum weitere 120 Minuten bei 70° im Ofen getempert.

Die berechnete Kennzahl ist 426.

Der Schaumstoff hatte eine Lichttransmission von 28% (Dicke 20 mm).

Beispiel 5

Eine Isocyanat-reaktive Zusammensetzung aus 2,13 g Ethylenglykol, 0,21 g Wasser, 1,05 g Schaumstabilisator Tegostab B8490, 1,05 g Katalysator Kaliumacetat, und 1,05 g Katalysator Formrez UL-28 wurde mit einem Isocyanat-c-Pentan-Gemisch aus 25,92g Desmodur® HL, 64,10 g Desmodur® N3600, 10,25 g Bayhydur® 3100 und 3,09 g cyclo-Pentan für 30 Sekunden mit einem Speedmixer bei 2000 U/min quasi blasenfrei vermischt und vorsichtig in eine Form ausgegossen. Danach wurde die Form in einen Ofen bei 70°C gestellt. Der Schaum hatte eine Klebfreizeit von 120 Sekunden abgebunden. Danach wurde der Schaum weitere 120 Minuten bei 70° im Ofen getempert.

Die berechnete Kennzahl ist 590.

Der Schaumstoff hatte eine Lichttransmission von 18% (Dicke 20 mm).

Beispiel 6

Eine Isocyanat-reaktive Zusammensetzung aus 2,17 g Ethylenglykol, 2,17 g Polyether V531, 0,24 g Wasser, 13,05 g Flammschutzmittel TCPP, 8,70 g Flammschutzmittel TEP, 1,44 g Schaumstabilisator Tegostab B8490, 3,46 g Katalysator Kalium-2-ethylhexanoat, 0,29 g Katalysator Formrez UL-28 und 1,73 g Tetramethylguanidin wurde mit einem Isocyanat-c-Pentan-Gemisch aus 73,79 g Desmodur® N3600, 4,10 g Bayhydur® 3100, 4,10 g Desmodur® N3200 und 4,8 g cyclo-Pentan für 30 Sekunden mit einem Speedmixer bei 2000 U/min quasi blasenfrei vermischt und vorsichtig in eine Form ausgegossen. Danach wurde die Form in einen Ofen bei 70°C gestellt. Der Schaum hatte eine Klebfreizeit von 3Minuten. Danach wurde der Schaum weitere 120 Minuten bei 70° im Ofen getempert.

Die berechnete Kennzahl ist 300.

Der Schaumstoff hatte eine Lichttransmission von 15% (Dicke 20 mm).

Vergleichsbeispiel 1

Eine Isocyanat-reaktive Zusammensetzung aus 1,30 g Ethylenglykol, 1,04 g Wasser, 1,20 g Schaumstabilisator Tegostab B8490, 2,40 g Katalysator Desmorapid® 30HB14 und 0,90 g Katalysator Formrez UL-28 wurde mit einem Isocyanatgemisch aus 38,21g Desmodur® HL gelöst in 63,64 g Desmodur® N3600, 11,30 g Bayhydur® 3100 mit einem Laborrührwerk der Fa. Pendraulik bei 3730 U/min für 15 Sekunden (weitgehend blasenfrei) vermischt und das Reaktionsgemisch vorsichtig in eine Form gegossen. Danach wurde die Form in einen Ofen bei 70°C gestellt. Der Schaum war nach 90 Sekunden abgebunden. Danach wurde der Schaum weitere 15 Minuten bei 70° im Ofen getempert.

Die berechnete Kennzahl ist 300.

Der Schaumstoff hatte eine Lichttransmission von 3,5 % (Dicke 20 mm).

Die Zellgröße betrug ca. 0,5 bis 1,5 mm.

Vergleichsbeispiel 2

Eine Isocyanat-reaktive Zusammensetzung aus 1,08 g Ethylenglykol, 0,87 g Wasser, 1,14 g Schaumstabilisator Tegostab B8490, 0,57 g Katalysator Desmorapid® 30HB14, 0,28 g Katalysator Formrez UL-28 und 10,0 g Triethylphosphat wurde mit einem Isocyanatgemisch aus 30,00g Desmodur® T100, 60,00 g Desmodur® N3600 und 10,00 g Bayhydur® 3100 mit einem Laborrührwerk der Fa. Pendraulik bei 3730 U/min für 15 Sekunden (weitgehend blasenfrei) vermischt und das Reaktionsgemisch vorsichtig in eine Form gegossen. Danach wurde die Form in einen Ofen bei 70°C gestellt. Der Schaum war nach 90 Sekunden abgebunden. Danach wurde der Schaum weitere 15 Minuten bei 70° im Ofen getempert.

Die berechnete Kennzahl ist 500.

Der Schaumstoff hatte eine Lichttransmission von 2,5 % (Dicke 20 mm).

Die Zellgröße ist < 1,5 mm.

Vergleichsbeispiel 3

Eine Isocyanat-reaktive Zusammensetzung aus 2,13 g Ethylenglykol, 1,05 g Schaumstabilisator Tegostab B8490, 1,05 g Katalysator Kaliumacetat, und 0,52 g Katalysator Formrez UL-28 wurde mit einem Isocyanat-c-Pentan-Gemisch aus 90,00 g Desmodur® N3600, 10,00 g Bayhydur® 3100 und 3,09 g cyclo-Pentan für 30 Sekunden mit einem Speedmixer bei 2000 U/min quasi blasenfrei vermischt und vorsichtig in eine Form ausgegossen. Danach wurde die Form in einen Ofen bei 70°C gestellt. Es ist kein Schaum entstanden.

Die berechnete Kennzahl ist 800.

Verwendete Messverfahren:

Die Wärmeleitzahlen wurden gemäß nach DIN 52616: 1977-11 an 30 mm dicken Schaumstoffen ermittelt.

Lichttransmission nach EN ISO 13468-2:2006 an 20 mm dicken Schaumstoffen gemessen, außer es wird explizit eine andere Dicke angegeben.

Zellgröße und Zellstegdicke wurden wie vorstehend beschrieben unter Verwendung eines Lichtmikroskops gemessen.

Der Yellowing Index, nachstehend auch lediglich als YI bezeichnet, wurde gemäß ASTM E 313:2015 bestimmt.

Der Haze wurde nach ASTM D1003-13 ermittelt.

**Patentansprüche**

1. Verfahren zur Herstellung von transluzenten Polyurethan- und Polyisocyanuratschaumstoffen durch Umsetzung einer Komponente A umfassend oder bestehend aus,

    A1 mindestens ein, mit der Komponente B reaktives, Polyol;
    A2 gegebenenfalls mindestens ein Amin;
    A3 Wasser und gegebenenfalls Ameisensäure oder mindestens ein physikalisches Treibmittel oder Mischungen davon;
    A4 mindestens einen Schaumstabilisator
    A5 gegebenenfalls Hilfs- und/oder Zusatzstoffe;
    A6 gegebenenfalls mindestens ein Flammschutzmittel;
    A7 mindestens einen Katalysator;

und eine Komponente B, deren Gehalt an aromatischen Polyisocyanaten wenigstens 5 Gew.-% und höchstens 70 Gew.-% beträgt, umfassend,

    B1 mindestens eine aliphatische oder cycloaliphatische Polyisocyanatkomponente oder eine Kombination davon; und
    B2 gegebenenfalls mindestens ein hydrophiliertes Isocyanat; und
    B3 größer oder gleich 10 Gew.-Teile und bis zu 70 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden, **dadurch gekennzeichnet, dass**

die Umsetzung der Komponente A mit der Komponente B bei einer Isocyanat-Kennzahl von wenigstens 200 durchgeführt wird

    wobei im Wesentlichen keine gasförmigen Nukleierungsmittel, eingetragen durch den Mischprozess, bei der Reaktion anwesend sind, und wobei die erhaltenen transluzenten Polyurethan- und Polyisocyanuratschaumstoffe eine Lichttransmission nach EN ISO 13468-2:2006 von mindestens 10% und einen Haze von mindestens 70%, bestimmt nach ASTM D1003-13, jeweils gemessen bei einer Schichtdicke von 20 mm, aufweisen.

2. Verfahren gemäß Anspruch 1, **dadurch gekennzeichnet, dass** der erhaltene transluzente Polyurethan- oder Polyisocyanuratschaumstoff eine Wärmeleitfähigkeit, gemessen gemäß DIN 52612:2-1984-06, von kleiner als 100 mW/(m*K) aufweist.

3. Verfahren gemäß einem der vorstehenden Ansprüche, **dadurch gekennzeichnet, dass** der erhaltene transluzente Polyurethan- oder Polyisocyanuratschaumstoff einen NCO-Modifizierungsgrad von mindestens 30 Mol% aufweisen.

4. Verfahren gemäß einem der vorstehenden Ansprüche, **dadurch gekennzeichnet, dass** der erhaltene transluzente Polyurethan- oder Polyisocyanuratschaumstoff farblos bis weiß ist und einen Yellowing Index, gemessen nach ASTM E 313:2015, von kleiner 30 aufweist, bezogen auf eine Schichtdicke des Schaumstoffs von 20 mm.

5. Verfahren gemäß einem der vorstehenden Ansprüche, **dadurch gekennzeichnet, dass** der erhaltene Polyurethan- oder Polyisocyanuratschaumstoff als ein zu mindestens 40% geschlossenzelliger Polyurethan- oder Polyisocyanuratschaumstoff vorliegt.

6. Verfahren gemäß einem der vorstehenden Ansprüche, **dadurch gekennzeichnet, dass** der erhaltene Polyurethan- oder Polyisocyanuratschaumstoff eine mittlere Zellgröße zwischen 1 mm und 20 mm aufweist, bestimmt unter Verwendung eines Lichtmikroskops; wobei der größte Abstand zwischen zwei Zellkanten als Zellgröße definiert wird.

7. Verfahren gemäß einem der vorstehenden Ansprüche, **dadurch gekennzeichnet, dass** der erhaltene Polyurethan- oder Polyisocyanuratschaumstoff eine Rohdichte des erhaltenen Schaums von höchstens 300 kg/m$^3$, bestimmt mittels DIN EN ISO 845:2009-10, aufweist.

8. Verfahren gemäß einem der vorstehenden Ansprüche, **dadurch gekennzeichnet, dass** der erhaltene Polyurethan- oder Polyisocyanuratschaumstoff eine mittlere Zellstegdicke von mindestens 0,05 mm aufweist, bestimmt unter Verwendung eines Lichtmikroskops; wobei die Dicke eines Zellsteges in der Mitte zwischen zwei Zwickeln als Zellstegdicke definiert wird.

9. Verfahren gemäß einem der vorstehenden Ansprüche, **dadurch gekennzeichnet, dass** die Komponente A

10 bis 99,3 Gew.-Teile von A1;
0 bis 10 Gew.-Teile von A2;
0,1 bis 80 Gew.-Teile von A3;
0 bis 50 Gew.-Teile von A5;
0 bis 80 Gew.-Teile von A6;
wobei die Summe von A1 bis A7 100 Gew.-Teile ergibt.

10. Verfahren gemäß einem der vorstehenden Ansprüche, **dadurch gekennzeichnet, dass**

0,5 bis 25 Gew.-Teile von A4;
0,1 bis 60 Gew.-Teile von A7 enthalten sind, bezogen auf 100 Gew.-Teile, die sich ergeben aus der Summe von A1 bis A7.

11. Das Verfahren gemäß einem der vorstehenden Ansprüche, **dadurch gekennzeichnet, dass** die Polyisocyanatkomponente B in ihrer Gesamtheit einen Gehalt Urethangruppen von höchstens 5 Gew.-% bezogen auf ihr Gesamtgewicht aufweist.

12. Transluzenter Polyurethan- oder Polyisocyanuratschaumstoff, welcher durch ein Verfahren der vorstehenden Ansprüche erhalten wurde.

13. Mehrschichtverbundelement, in welchem der transluzente Polyurethan- oder Polyisocyanuratschaumstoff gemäß Anspruch 12 zwischen zwei Elementen vorliegt.

14. Mehrschichtverbundelement gemäß Anspruch 13, **dadurch gekennzeichnet, dass** die zwei Elemente transparente Folien oder Platten sind.

15. Verwendung des transluzenten Polyurethan- oder Polyisocyanuratschaumstoffs gemäß Anspruch 12 oder des Mehrschichtverbundelements gemäß Anspruch 13 oder 14 als Bauelement, als Wandelement, als Bodenelement, in Gebäuden, in Fahrzeugen oder Lampen oder in Kombination mit eingelassenen Lampen als Leuchtelement, insbesondere in Paneel-Form.

**Claims**

1. Process for producing translucent polyurethane and polyisocyanurate foams by reaction of a component A comprising or consisting of

A1 at least one polyol reactive with the component B;
A2 optionally at least one amine;
A3 water and optionally formic acid or at least one physical blowing agent or mixtures thereof;
A4 at least one foam stabilizer
A5 optionally auxiliary and/or additive substances;
A6 optionally at least one flame retardant;
A7 at least one catalyst;

and a component B whose content of aromatic polyisocyanates is not less than 5% by weight and not more than 70% by weight, comprising

B1 at least one aliphatic or cycloaliphatic polyisocyanate component or a combination thereof; and
B2 optionally at least one hydrophilized isocyanate; and
B3 not less than 10 parts by weight and up to 70 parts by weight of an aromatic polyisocyanate component, wherein the parts by weight of B3 are based on the sum of the parts by weight of B1 to B3 which are normalized to 100 parts by weight, **characterized in that**

the reaction of the component A with the component B is performed at an isocyanate index of at least 200

wherein substantially no gaseous nucleating agents introduced by the mixing process are present during the reaction and

wherein the obtained translucent polyurethane and polyisocyanurate foams have a light transmission according to EN ISO 13468-2:2006 of at least 10% and a haze of at least 70% determined according to ASTM D1003-13 in each case measured at a thickness of 20 mm.

2. Process according to Claim 1, **characterized in that** the obtained translucent polyurethane or polyisocyanurate foam has a thermal conductivity measured according to DIN 52612:2-1984-06 of less than 100 mW/ (m*K).

3. Process according to either of the preceding claims, **characterized in that** the obtained translucent polyurethane or polyisocyanurate foam has a degree of NCO modification of at least 30 mol%.

4. Process according to any of the preceding claims, **characterized in that** the obtained translucent polyurethane or polyisocyanurate foam is colorless to white and has a yellowing index measured according to ASTM E 313:2015 of less than 30 based on a thickness of the foam of 20 mm.

5. Process according to any of the preceding claims, **characterized in that** the obtained polyurethane or polyisocyanurate foam is in the form of a polyurethane or polyisocyanurate foam having a closed-cell content of at least 40%.

6. Process according to any of the preceding claims, **characterized in that** the obtained polyurethane or polyisocyanurate foam has an average cell size between 1 mm and 20 mm determined using an optical microscope, wherein cell size is defined as the greatest distance between two cell edges.

7. Process according to any of the preceding claims, **characterized in that** the obtained polyurethane or polyisocyanurate foam has an apparent density of the obtained foam of not more than 300 kg/m$^3$ determined according to DIN EN ISO 845:2009-10.

8. Process according to any of the preceding claims, **characterized in that** the obtained polyurethane or polyisocyanurate foam has an average cell wall thickness of at least 0.05 mm determined using an optical microscope, wherein cell wall thickness is defined as the thickness of a cell wall centrally between two nodes.

9. Process according to any of the preceding claims, **characterized in that** the component A contains

10 to 99.3 parts by weight of A1;
0 to 10 parts by weight of A2;
0.1 to 80 parts by weight of A3;
0 to 50 parts by weight of A5;
0 to 80 parts by weight of A6;
wherein the sum of A1 to A7 is 100 parts by weight.

10. Process according to any of the preceding claims, **characterized in that**

0.5 to 25 parts by weight of A4;
0.1 to 60 parts by weight of A7 are present based on 100 parts by weight made up of the sum of A1 to A7.

11. Process according to any of the preceding claims, **characterized in that** the polyisocyanate component B in its entirety has a content of urethane groups of not more than 5% by weight based on their total weight.

12. Translucent polyurethane or polyisocyanurate foam obtained by a process of the preceding claims.

13. Multilayer composite element in which the translucent polyurethane or polyisocyanurate foam according to Claim 12 is arranged between two elements.

14. Multilayer composite element according to Claim 13, **characterized in that** the two elements are transparent films or sheets.

15. Use of the translucent polyurethane or polyisocyanurate foam according to Claim 12 or of the multilayer composite element according to Claim 13 or 14 as a constructional element, as a wall element, as a floor element, in buildings, in vehicles or lamps or in combination with recessed lamps as an illumination element, in particular in panel form.


**Revendications**

1. Procédé pour la préparation de mousses translucides de polyuréthane et de polyisocyanurate par transformation d'un composant A comprenant ou constitué par :

A1 au moins un polyol réactif avec le composant B ;
A2 le cas échéant au moins une amine ;

A3 de l'eau et le cas échéant de l'acide formique ou au moins un agent gonflant physique ou des mélanges de ceux-ci ;
A4 au moins un stabilisant de mousse ;
A5 le cas échéant des adjuvants et/ou des additifs ;
A6 le cas échéant au moins un agent ignifuge ;
A7 au moins un catalyseur ;

et d'un composant B dont la teneur en polyisocyanates aromatiques est d'au moins 5% en poids et d'au plus 70% en poids, comprenant

B1 au moins un composant polyisocyanate aliphatique ou cycloaliphatique ou une combinaison de ceux-ci ; et
B2 le cas échéant au moins un isocyanate hydrophilisé ; et
B3 10 parties en poids ou plus et jusqu'à 70 parties en poids d'un composant polyisocyanate aromatique, les parties en poids de B3 se référant à la somme des parties en poids de B1 à B3 qui sont normalisées à 100 parties en poids, **caractérisé en ce que**
la transformation du composant A avec le composant B est réalisée à un indice d'isocyanate d'au moins 200, pratiquement aucun agent de nucléation gazeux, introduit par le procédé de mélange, n'étant présent lors de la réaction et les mousses translucides de polyuréthane et de polyisocyanurate obtenues présentant une transmission de la lumière selon la norme EN ISO 13468-2:2006 d'au moins 10% et un voile d'au moins 70%, déterminé selon la norme ASTM D1003-13, mesurés à chaque fois à une épaisseur de couche de 20 mm.

2. Procédé selon la revendication 1, **caractérisé en ce que** la mousse translucide de polyuréthane ou de polyisocyanurate obtenue présente une conductibilité thermique, mesurée selon la norme DIN 52612:2-1984-06, inférieure à 100 mW/(m*K).

3. Procédé selon l'une quelconque des revendications précédentes, **caractérisé en ce que** la mousse translucide de polyuréthane ou de polyisocyanurate obtenue présente un degré de modification de NCO d'au moins 30% en mole.

4. Procédé selon l'une quelconque des revendications précédentes, **caractérisé en ce que** la mousse translucide de polyuréthane ou de polyisocyanurate obtenue est incolore à blanche et présente un indice de jaunissement, mesuré selon la norme ASTM E 313:2015, inférieur à 30, par rapport à une épaisseur de couche de la mousse de 20 mm.

5. Procédé selon l'une quelconque des revendications précédentes, **caractérisé en ce que** la mousse de polyuréthane ou de polyisocyanurate obtenue se trouve sous forme d'une mousse de polyuréthane ou de polyisocyanurate à pores dont au moins 40% sont fermés.

6. Procédé selon l'une quelconque des revendications précédentes, **caractérisé en ce que** la mousse de polyuréthane ou de polyisocyanurate obtenue présente une dimension moyenne de pore entre 1 mm et 20 mm, déterminée à l'aide d'un microscope optique ; la plus grande distance entre deux bords de pore étant définie comme dimension de pore.

7. Procédé selon l'une quelconque des revendications précédentes, **caractérisé en ce que** la mousse de polyuréthane ou de polyisocyanurate obtenue présente une densité brute de la mousse obtenue d'au plus 300 kg/m$^3$, déterminée selon la norme DIN EN ISO 845:2009-10.

8. Procédé selon l'une quelconque des revendications précédentes, **caractérisé en ce que** la mousse de polyuréthane ou de polyisocyanurate obtenue présente une épaisseur moyenne de l'âme entre les pores d'au moins 0,05 mm, déterminée à l'aide d'un microscope optique ; l'épaisseur d'une âme entre les pores étant définie au centre entre deux interstices en tant qu'épaisseur d'âme de pore.

9. Procédé selon l'une quelconque des revendications précédentes, **caractérisé en ce que** le composant A contient

10 à 99,3 parties en poids de A1 ;
0 à 10 parties en poids de A2 ;
0,1 à 80 parties en poids de A3 ;
0 à 50 parties en poids de A5 ;
0 à 80 parties en poids de A6 ;
la somme de A1 à A7 valant 100 parties en poids.

10. Procédé selon l'une quelconque des revendications précédentes, **caractérisé en ce que**

0,5 à 25 parties en poids de A4 ;
0,1 à 60 parties en poids de A7 ;
sont contenues, par rapport à 100 parties en poids qui proviennent de la somme de A1 à A7.

11. Procédé selon l'une quelconque des revendications précédentes, **caractérisé en ce que** le composant polyisocyanate B présente, dans sa totalité, une teneur en groupes uréthane d'au plus 5% en poids par rapport à son poids total.

12. Mousse translucide de polyuréthane ou de polyisocyanurate qui a été obtenue par un procédé selon les revendications précédentes.

13. Élément composite multicouche, dans lequel la mousse translucide de polyuréthane ou de polyisocyanurate selon la revendication 12 se trouve entre deux éléments.

14. Élément composite multicouche selon la revendication 13, **caractérisé en ce que** les deux éléments sont des feuilles ou des plaques transparentes.

15. Utilisation de la mousse translucide de polyuréthane ou de polyisocyanurate selon la revendication 12 ou de l'élément composite multicouche selon la revendication 13 ou 14 comme élément de construction, comme élément de paroi, comme élément de sol dans des bâtiments, dans des véhicules ou dans des lampes ou en combinaison avec des lampes intégrées en tant qu'élément d'éclairage, en particulier sous forme de panneau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005042235 A1
- EP 0629607 A2
- EP 0010589 A1
- EP 0047452 A1
- US 3645979 A
- WO 2016146579 A